(19) Europäisches Patentamt
European Patent Office
Office européen des brevets

(11) **EP 4 462 319 A1**

(12) **EUROPEAN PATENT APPLICATION**

(43) Date of publication:
**13.11.2024 Bulletin 2024/46**

(21) Application number: **24168112.1**

(22) Date of filing: **02.04.2024**

(51) International Patent Classification (IPC):
**G06N 10/40** *(2022.01)*      **G06N 10/60** *(2022.01)*

(52) Cooperative Patent Classification (CPC):
**G06N 10/40; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.05.2023 EP 23172428**

(71) Applicant: **Orange Quantum Systems Holding B.V.
2628 XG Delft (NL)**

(72) Inventor: **Rol, Michiel Adriaan
2628 XG Delft (NL)**

(74) Representative: **De Vries & Metman
Overschiestraat 180
1062 XK Amsterdam (NL)**

(54) **CALIBRATING QUBITS OF A QUANTUM DEVICE**

(57)    Method for calibrating one or more qubits is described comprising; configuring one or more qubit control signals based on one or more optimization parameters, the one or more qubit control signals defining one or more cyclic operations; repeatedly executing at least one of the one or more cyclic operations by repeatedly applying the one or more qubit control signals to the one or more qubits, the repeated execution of the at least one cyclic operation causing the qubits to evolve in a predetermined sequence through all states of the computational basis; generating one or more measurement outcomes by measuring the states of the one or more qubits in the computational basis after execution of each cyclic operation; computing an error using a cost function based on the one or more measurement outcomes and based on one or more target outcomes associated with the predetermined sequence of states of the computation basis; and, updating the values of the one or more optimization parameters based on the error.

**Description**

Technical field

The disclosure generally relates to calibrating qubits of a quantum device,Q and in particular, though not exclusively, to methods and systems for calibrating qubits, especially multi-qubit configurations, of a quantum device, and computer program product using such methods.

Background

The benchmarking and operation of quantum devices such as quantum processing units (QPUs), requires extensive, time-consuming calibration protocols to 'tune up' control operations. The calibration protocols typically require a well-defined initial state of the system, which is conventionally achieved by either qubit relaxation or active reset. As advancements are made in QPU quality, qubit initialization by relaxation, which typically takes five times the qubit relaxation time, will provide a major contribution to the total experiment duration, making it not suitable for fast characterization and pulse calibration. Although active reset delivers rapid and reliable qubit initialization, it requires previously calibrated operations and control hardware capable of fast feedback.

Rol et al. described in their article Restless Tuneup of High-Fidelity Qubit Gates, Phys. Rev. Applied (2017) a calibration scheme referred to as restless tune-up that benefits from the rapid qubit state initialization of an active reset, with the relaxed hardware constraints of qubit relaxation, when performing cost-function optimization of pulse parameters. Restless tune-up achieves this by using the qubit state after the last qubit measurement as the initial state for the next measurement round. However, this calibration scheme has some limitations in the sense that it is limited to single-qubit operations; limited to the gate infidelity as given by Randomized Benchmarking as cost function, and uses a cost-function that is first-order insensitive to control parameters resulting in coherent errors.

Hence, from the above it follows that there is a need in the art for methods and systems for calibrating qubits, especially multi-qubit configurations, of a quantum computer.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Aspects of the embodiments are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus such as an FPGA to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments in this application relate to schemes for calibrating qubits of a quantum device, such as a quantum processing unit (QPU), a quantum communication device and/or a quantum sensing device. To provide a resource efficient calibration process for multi-qubit operations, the test protocols used in the calibration schemes according to the embodiments in this application use so-called cyclic quantum gate operations, or in short cyclic operations.

A cyclic operation as described with reference to the embodiments in this application defines one or more predetermined single- or multi-qubit operations, i.e. operations that allow qubits to interact with each other. A well-known example is the SWAP gate which swaps the states of two qubits. Another example is the CNOT gate that conditionally on the state of the first qubit applies an X-operation on the second qubit.

A cycle as described with reference to the embodiments in this application may define repeated application a cyclic operation to qubits that are in a state of the computational basis of the qubits so that the qubits go through states of the computational basis. When applying a cyclic operator to an input state, the output state should always be the next state in the cycle, irrespective what the input state is. This way, a cycle including the repeated application of a cyclic operation defines a predetermined pattern of states that the qubits will go through. When executing a cycle, errors can be detected (and counted) by determining deviations from this pattern.

In an aspect, the embodiments relate to a method calibrating one or more qubits wherein the method may comprise one or more of the following steps: configuring one or more qubit control signals based on one or more optimization parameters, the one or more qubit control signals defining one or more cyclic operations; repeatedly executing at least one of the one or more cyclic operations by repeatedly applying the one or more qubit control signals to the one or more qubits, the repeated execution of the at least one cyclic operation causing the qubits to evolve in a predetermined pattern through all states of the computational basis; generating one or more measurement outcomes by measuring the states of the one or more qubits in the computational basis after execution of each cyclic operation; computing an error using a cost function based on the one or more measurement outcomes and based on one or more target outcomes associated with the predetermined pattern of states of the computation basis; and, updating the values of the one or more optimization parameters based on the error.

In an embodiment, the method may further comprise repeating the execution of the cyclic operations, the generation of the one or more measurements outcomes and the computation of the error until the error meets one or more optimization conditions.

In an embodiment, the cyclic operation may include one or multiple executions of a basic multi-qubit operation followed by the execution of a reconstruction operation, which when combined with the one or multiple executions of the basic multi-qubit operation defines a cyclic operation.

In an embodiment, after an execution of a cyclic operation, the end state of the one or more qubits after measuring the states of the qubits is used as the input state for the next execution of a cyclic operation.

In an embodiment, the costs function may be configured to penalize measurement outcomes if they do not follow the predetermined pattern of states.

In an embodiment, the error may be optimized to find one or more optimal control parameters that maximizes a gate fidelity or minimized a gate infidelity.

In an embodiment, the repeated execution of the at least one cyclic operation and the generation of the one or more measurement outcomes may be repeated for different cyclic operations selected from a family of cyclic operations.

In an embodiment, the error may be computed based measurement outcomes associated with the different cyclic operations.

In an embodiment, the different cyclic operations may include a first cyclic operation associated with a first error amplification and/or a first number of minima or maxima and a second cyclic operation associated with a second error amplification and/or second number of minima or maxima.

In an embodiment, the first error amplification may be different from the second amplification and the first number of minima or maxima may be different from the second number of minima or maxima.

In an embodiment, the number of minima or maxima associated with the first cyclic operation and the number of minima or maxima associated with the second cyclic operation are not multiples of each other.

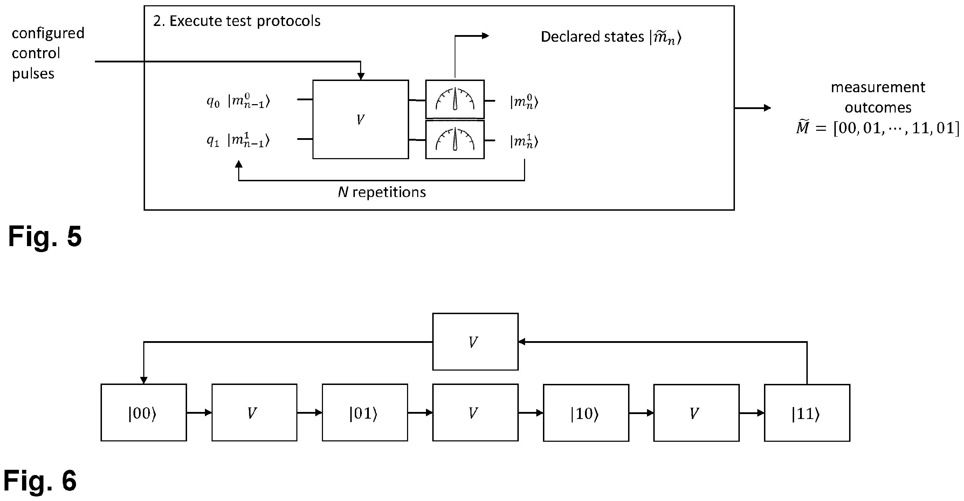

Hence, a family of cyclic operations $\{V_j\}$ may be defined based on any member $V$. For the execution of a cyclic test protocol, the entire family $\{V_j\}$ or a substantial part of the family may be used. This way $N$ repetitions of experiments may be performed as illustrated with reference to the embodiments in this application (see e.g. Fig. 5) and for each repetition a member $V$ of a family of cyclic operations $\{V_j\}$ may be used. This means that for every repetition, a different implementation of a cyclic operation may be used. Hence, different cyclic operations with different error amplification and a different number of minima or maxima may be used. This way, the measurement outcomes $\tilde{M}$ can be associated with different cyclic operations, including a first cyclic operation associated with a first error amplification and a first number of minima or maxima and a second cyclic operation associated with second error amplification and a second number of minima or maxima, wherein the error amplification associated the first cyclic operation is different from the error amplification with the second cyclic operation and wherein the number of minima associated with the first cyclic operation and with the second cyclic operation are not multiples of each other. This way, when computing the cost function, one effectively averages over all the measurement outcomes $\{\tilde{M}\}$, and thus averaging over the amplifications and minima. An additional benefit hereof is the reduced overhead because all waveform instructions need to be uploaded once to the control hardware, instead of having to upload it for every time when restarting an optimization loop.

In an embodiment, the cyclic operation may include one or multiple executions of one or multiple basic multi-qubit operations followed by the execution of a reconstruction operation which - when combined with the one or multiple executions of the basic multi-qubit operation - defines a cyclic operation.

In an embodiment, after an execution of a cyclic operation, the end state of the qubits after measuring the states of the qubits is used as the input state for the next execution of a cyclic operation.

In an embodiment, a calibration scheme may include a cost-function which is based on cycling (i.e. evolving) the state of the qubits through all states of the computational basis of the qubits based on a cyclic operation or plurality of cyclic operations. The calibration scheme may be implemented as a software-based method (either as software module or coded in an FPGA) that computes the cost by penalizing deviations of the measured qubit states from the expected multi-qubit states associated with the cyclic test protocol. This way, the calibration protocol can be used to calibrate an arbitrary number of qubits.

In an embodiment, the calibration scheme may include a process that is configured to determine a recovery operation which rotates qubits to a desired state. The recovery operation ensures the implementation of a cycle. In an embodiment, the recovery operation may include computing a net operation performed by a benchmarking experiment based on the operations therein. Here, the net operation defines a single operation or a set of qubits to produce an effect which is identical to the effect produced by one or more consecutive operations applied to a set of qubits.

In a further embodiment, the recovery operation may include computing the recovery operation such that the net operation is a cyclic operation. The embodiment may further include applying the recovery operation before measuring the qubit state. The recovery operation allows the restless tune-up method to be used with any cost function.

In yet a further embodiment, the cyclic operation may be configured to amplify errors specific to certain control parameters of an experiment that needs to be optimized. This way, the thus constructed cyclic operation increases the sensitivity of the cost function to the optimized parameters.

In a further aspect, the embodiments relate to a hybrid computing system comprising a classical computer and a quantum processor, wherein the hybrid computing system may be configured for executing one or more of the following steps: configuring one or more qubit control signals based on one or more optimization parameters, the one or more qubit control signals defining one or more cyclic operations; repeatedly executing at least one of the one or more cyclic operations by repeatedly applying the one or more qubit control signals to the one or more qubits, the repeated execution of the at least one cyclic operation causing the qubits to evolve in a predetermined pattern through all states of the computational basis; generating one or more measurement outcomes by measuring the states of the one or more qubits in the computational basis after execution of each cyclic operation; computing an error using a cost function based on the one or more measurement outcomes and based on one or more target outcomes associated with the predetermined pattern of states of the computation basis; and, updating the values of the one or more optimization parameters based on the error.

In an embodiment, the hybrid computing system may be further configured for: repeating the execution of the cyclic operations, the generation of the measurements outcomes and the computation of the error until the error meets one or more optimization conditions.

In further embodiment, the hybrid computing system may be configured for executing any of the method steps described above.

The embodiments may also relate to a computer program or suite of computer programs comprising at least one software code portion the software code portion, when run on a computer, being configured for executing the method steps according any of claims.

Brief Description of the drawings

**Fig. 1** depicts a schematic of a hybrid computing system including a classical processor and a quantum processing unit;

**Fig. 2** schematically depicts a calibration scheme for control pulses for controlling one or more qubits according to an embodiment;

**Fig. 3** depicts an example of a Pauli Transfer matrix configured to map a density map configuration of first a state to another state;

**Fig. 4** depicts a schematic representation of the energy levels of a quantum system;

**Fig. 5** depicts a schematic of the execution of a test protocol according to an embodiment;

**Fig. 6** depicts an example of execution of a cycle according to an embodiment.;

**Fig. 7** illustrates an example of a PTM for implementing a cyclic operation according an embodiment;

Fig. 8A-8D depict the constructing of cyclic test protocols for a multi-qubit calibration scheme according to an embodiment;

**Fig. 9A** and **9B** illustrate reconstruction operations and Pauli transfer matrices of cyclic operations according to various embodiments;

**Fig. 10** depicts a further example of a construction of a cyclic operation according to an embodiment;

**Fig. 11A-11C** illustrate the effect of averaging results of different basic circuit powers;

**Fig. 12A-12D** show an example of the amplification of the error sensitivity based on cyclic operations in a two-dimensional parameter space.

Description of the embodiments

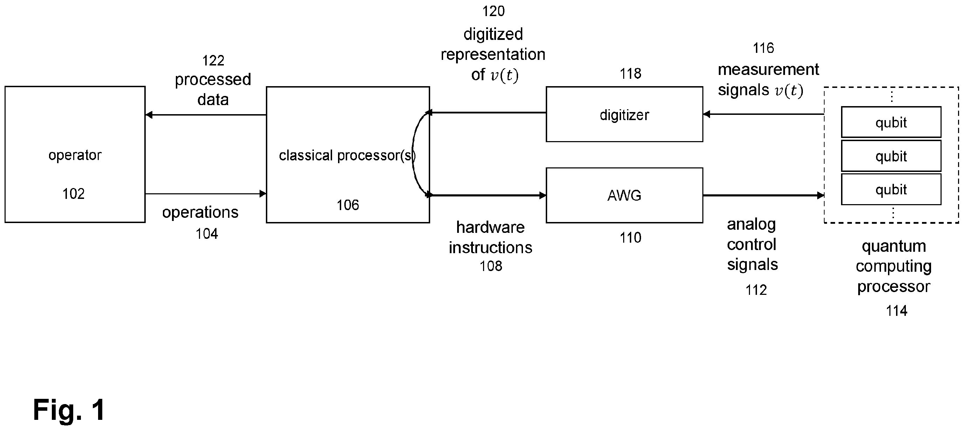

**Fig. 1** depicts a schematic of a hybrid computing system including a classical processor and a quantum device, such as a quantum processing unit (QPU) **114.** A quantum algorithm may be defined in terms of quantum circuits which define sequences of quantum gates, which may be regarded as instructions to manipulate the states of the qubits of the quantum device. Quantum gates are typically implemented by applying one or more control signals, e.g. ac signals such as pulses and/or dc signals, to qubits. An operator **102** who wishes to perform a quantum computing experiment, may program an experiment as a sequence of operations **104** (which may be a sequence of quantum gate operations, but also other operations) on a classical processor **106,** which may include a CPU, GPU and/or other special purpose processors such as an FPGA. The classical processor may be configured to translate the operations to an instruction set **108** that can be executed by a hardware system **110,** which may be configured to convert these instructions into analog signals **112** for controlling the qubits which are sent to the QPU. In an embodiment, the hardware system may for example comprise an arbitrary waveform generator (AWG),

The quantum device may comprise one or more qubits, which may be implemented based on any suitable hardware platforms, e.g. superconducting qubits, semiconducting qubits, qubits based on nitrogen vacancy NV centers in a diamond lattice. After the application of the control signals, the state of the qubits may be measured resulting in one or more analog measurement signals **116** which are sent back to the classical processor. The analog measurement signals may be digitized into a digital measurement signal **120** using a digitizer **118,** and processed by the classical processor. Then, the classical processor may either update the hardware instructions based on the processed data **122** (when performing automated experiments), or the operator may interpret the processed data and program a new experiment.

The shape of the control signals (electro-magnetic and/or optical pulses) sent to the qubits of the quantum processor needs to be calibrated by performing a test protocol on the QPU to ensure the control pulses realize the gate operations as defined in the quantum circuit that are executed by the system.

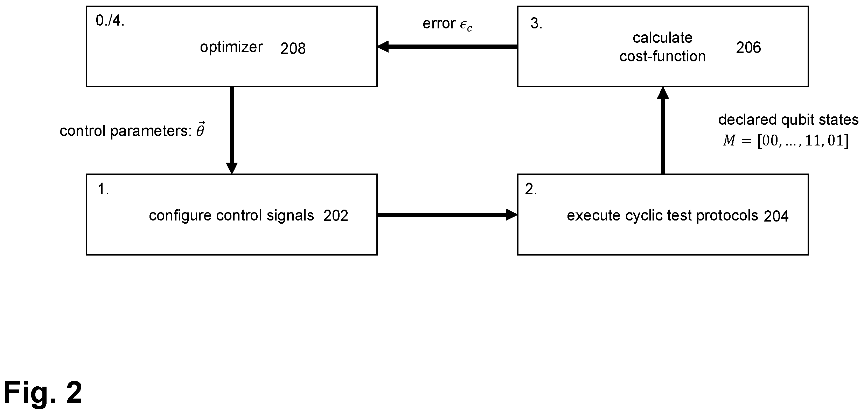

**Fig. 2** schematically depicts a calibration scheme for control pulses for qubits. Such calibration scheme may be executed by a hybrid computing system as described above with refence to **Fig. 1.** The problem of calibration of qubit control pulses (which may represent quantum gates) may be regarded as an optimization problem. The aim of this optimization problem is to find the optimal set of control parameters $\vec{\theta}$ that maximizes the average gate fidelity $F$ (or minimizes the gate infidelity) of one or more implemented quantum gates $\tilde{U}$ with respect to one or more ideal quantum gates $U$. The average gate fidelity may be defined as the average fidelity of the measured output state $\tilde{U}$ with respect to the ideal output state $U$ averaged over pure input states.

As shown in **Fig. 2,** the optimization scheme may include the step of configuring qubit control pulses based on one or more control parameters $\vec{\theta}$ (step **202).** Here, the qubit control pulses may define one or more quantum gate operations U. This step relates to the creation of the hardware instructions as well as the generation of the analog control signals by an AWG as illustrated in **Fig. 1.**

Then, a test protocol may be executed, including the execution of the one or more operations $U$ and the generation of measurement outcomes (step **204).** These measurement outcomes may be generated by digitizing the analog measurement signals created by the quantum device, and by declaring binary outcomes with a classical processor based on the analog measurement signals as shown in **Fig. 1.**

Based on the measurement outcomes an error $\varepsilon_c$ may be computed using a cost function (step **206).** The error may be defined by a distance measure between an implemented operation $\tilde{U}$ and an (ideal) target operation $U$. The distance measure may be based on the gate fidelity, the gate infidelity and/or any other suitable optimization parameter. As a gate operation may be implemented as one or more qubit control pulses applied to qubits of the QPU the optimization scheme may be configured to optimize the shape of qubit control pulses such that the error is minimized.

Then, the one or more control parameters $\vec{\theta}$ may be updated based on the error $\varepsilon_c$ (step **208)** until the error meets one or more optimization conditions. For example, an optimization condition may require that error is below a certain threshold value. Embodiments in this application relate to improvements in the execution of the test protocol and the computation of the error based on the cost function that is used during optimization.

When describing a QPU comprising a plurality of qubits, one has to distinguish classical mixtures from quantum superpositions. For example, a process for creating a qubit in states $|0\rangle$ and $|1\rangle$ with a probability of 50 % each, is very different from one that creates a quantum superposition of these states $|0\rangle + |1\rangle$ all the time. To make the distinction between a classical mixture and a quantum superposition, the concept of density matrices can be introduced. A density matrix may be defined as $\hat{\rho} = \sum_{i=0}^{N} |\Psi\rangle\langle\Psi|$. Here, $p_i$ is the *classical* probability of the system being in state $|\Psi\rangle$. In this example, the first process would result in density matrix:

$$\begin{bmatrix} 0.5 & 0 \\ 0 & 0.5 \end{bmatrix}$$

whereas the latter process would result in a matrix:

$$\begin{bmatrix} 0.5 & 0.5 \\ 0.5 & 0.5 \end{bmatrix}$$

Hence, the term "pure state" defines a quantum state that is not a classical mixture of different states (like in the latter example).

A different representation of the matrix density $\hat{\rho}$ may be provided by the expression $\hat{\rho} = \sum_{i=0}^{N} \rho_i \hat{P}_i$ where $\rho_i$ are real numbers and $\{\hat{P}_i\}$ forms the basis. For a single qubit, the *IXYZ* basis, $\{\hat{I}/\sqrt{2}, \hat{\sigma}_x/\sqrt{2}, \hat{\sigma}_z/\sqrt{2}\}$ may be used which contains a normalized unit matrix I and three normalized Pauli matrices. For two qubits, the density matrix is in that case a $4 \times 4$ matrix with 16 free parameters. Hence, a basis $\{\hat{P}_i\}$ with 16 elements is needed:

$$\{\hat{I}/\sqrt{2}, \hat{\sigma}_x/\sqrt{2}, \hat{\sigma}_z/\sqrt{2}\}^{\otimes 2}$$.

As a second example, the pure two-qubit state $|00\rangle$ can be described by a state vector $|\Psi\rangle = [1, 0, 0, 0]$, or a density matrix:

$$\hat{\rho} = |\Psi\rangle\langle\Psi| = \begin{bmatrix} 1 & 0 & 0 & 0 \\ 0 & 0 & 0 & 0 \\ 0 & 0 & 0 & 0 \\ 0 & 0 & 0 & 0 \end{bmatrix}$$

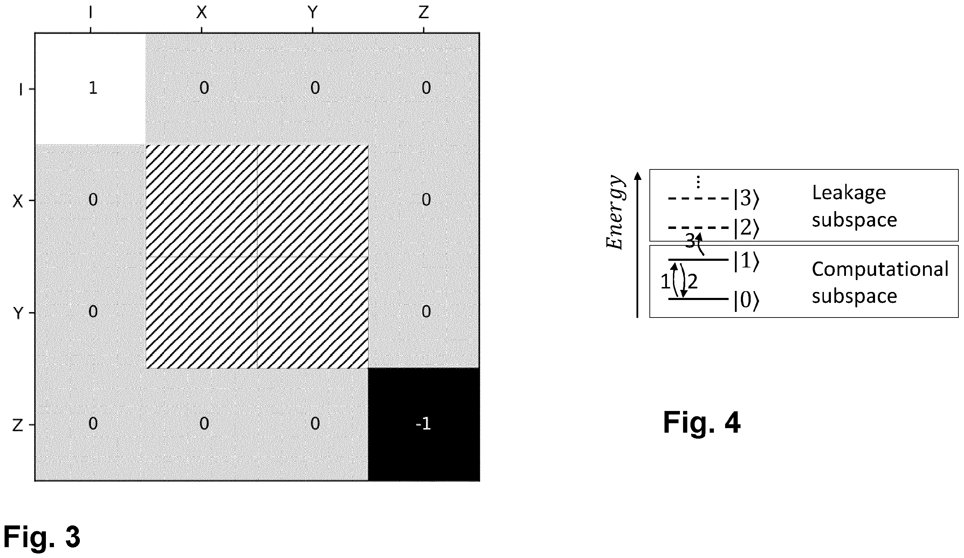

or in the *IXYZ*$^{\otimes 2}$ basis, with a vector $\vec{\rho} = \left[\frac{1}{2}, 0, 0, \frac{1}{2}, 0, 0, 0, 0, 0, 0, 0, \frac{1}{2}, 0, 0, \frac{1}{2}\right]$. Using this basis, a density matrix of dimensions $d \times d$ can be described by a Pauli vector $\vec{\rho}$ with $N = d^2$ elements $\rho_i = tr(\hat{\rho} \hat{P}_i)$. More generally, any operation changing the quantum state of this system can then be represented by an $N \times N$ matrix referred to as the Pauli Transfer Matrix (PTM). For example, a PTM describing the evolution of pure state $|00\rangle$ to pure state $|01\rangle$ is depicted in **Fig. 3.** Note that this matrix does not uniquely define the evolution.

In this application, ideal quantum gate operations or circuits comprising a sequence of ideal quantum gate operations are denoted a capital letter (such as $U$), whereas the non-ideal execution of these quantum operations or quantum circuits by a QPU is denoted with a tilde (such as $\tilde{U}$). Here non-ideal execution refers to noisy execution of operations which may introduce errors of different types, e.g. gate errors, readout errors and/or leakage. These different error types may affect the state of the qubits differently. For example, the conditional $Z$ (*CZ*) operation is an entangling operation between two qubits $q_0$ and $q_1$. Ideally, such operation implements the following unitary operating on a state vector $|\psi\rangle$:

$$U_{CZ} = \begin{bmatrix} 1 & 0 & 0 & 0 \\ 0 & 1 & 0 & 0 \\ 0 & 0 & 1 & 0 \\ 0 & 0 & 0 & -1 \end{bmatrix}$$

Noisy execution of this operation may cause a gate error. In that case, the noisy operation may be described by the following unitary transformation:

$$\tilde{U}_{CZ} = \begin{bmatrix} 1 & 0 & 0 & 0 \\ 0 & e^{-i\theta_0} & 0 & 0 \\ 0 & 0 & e^{-i\theta_1} & 0 \\ 0 & 0 & 0 & e^{-i\theta_{2Q}} \end{bmatrix}$$

where $\theta_0$ ($\theta_1$) is a single-qubit phase error on qubit 0 (1), and $\theta_{2Q}$ is the conditional phase implemented by the operation. In an ideal (noise-free) implementation of this operation, $\theta_0 = \theta_1 = 0$ and $\theta_{2Q} = 180°$. Note that this is just one illustration of a error. Different errors, such as gate errors, readout errors and/or leakage, may introduce different unitary transformations.

As described in the background, known calibration methods use randomized benchmarking as a test protocol to optimize qubit control parameters for a single qubit. To provide a resource efficient calibration process for multi-qubit operations, the test protocols used in the calibration schemes according to the embodiments in this application use so-called cyclic quantum gate operations, or in short cyclic operations.

A cyclic operation as described with reference to the embodiments in this application defines one or more predetermined multi-qubit operations, i.e. operations that allow qubits to interact with each other. A well-known example is the SWAP gate which swaps the states of two qubits. Another example is the CNOT gate that conditionally on the state of the first qubit applies an X-operation on the second qubit.

A cycle may define repeated application a cyclic operation to qubits that are in a state of the computational basis of the qubits so that the qubits go through at least all states of the computational basis. When applying a cyclic operator to an input state, the output state should always be the next state in the cycle, irrespective what the input state is. This way, a cycle including the repeated application of a cyclic operation defines a predetermined pattern of states that the qubits will go through. When executing a cycle, errors can be detected (and counted) by determining deviations from this pattern.

**Fig. 4** schematically illustrates the energy levels of a single quantum system. A qubit may be implemented by considering only the lowest to energy levels of the system ($|0\rangle$ and $|1\rangle$) which form the ground states of the computation subspace. The quantum system may include higher order states $|2\rangle$, $|3\rangle$,... that from a leakage subspace. Control signals are configured to drive transitions $402_{1,2}$ between the ground states of the computation subspace that are used to implement quantum gates. If a control signal drives another transition (for example transition $|2\rangle \rightarrow |3\rangle$ **404** from the computation subspace to the leakage subspace or any other transition to or from the leakage subspace), the qubit 'leaks' out of the computational subspace. Typically, transitions from a computational ground state to a leakage state are not resonant with non-leakage transitions, so that the probability of leaking back into the computational space is small. Hence, the qubit will remain in this state until it either relaxes through spontaneous emission or is resonantly driven back. Since leakage errors leave the qubit in a non-usable state, it is important that an optimization scheme for calibrating qubits is robust against such errors.

**Fig. 5** depicts a schematic of the execution of a test protocol according to an embodiment. The execution of the protocol may be part of qubit calibration scheme for calibration of a plurality of qubits. The figure illustrates a multi-qubit configuration **502,** in this example a two-qubit configuration, including a first qubit in an initial state $|m_{n-1}^0\rangle$ and a second qubit in an initial state $|m_{n-1}^1\rangle$. A cyclic operation $V$ **504** (which may be selected from a family of cyclic

operations $\{V_j\}$) may be executed, wherein the cyclic operation represents one or more quantum gate operations to be executed on the qubits of the QPU. Here, execution of the cyclic operation may include applying one or more qubit control pulses **506** (characterized by a set of control parameters $\vec{\theta}$ that need to be optimized) to the qubits. After execution of the cyclic operation, the end states $|m_n^0\rangle$ and $|m_n^1\rangle$ **508** of the qubits may be measured using, for example, a quantum-non-demolition (QND) measurement, wherein the post-measurement state of the qubits is the same as the measured state. This way, after measurement, the end state can be used as initial state for a next execution of the cyclic operation. This process may be repeated a number of times (e.g. $N$ repetitions) wherein each repetition produces a measured outcome $\tilde{m}$ **510**. This way a set of declared measurement outcomes $\tilde{M}$ = [00, 01,···,11, 01] **512** may be determined, which may be used in the next step of the optimization scheme in which the cost associated with the specific parameterization is computed (see e.g. step **206** in **Fig. 2).**

**Fig. 6** depicts an example of execution of a cycle according to an embodiment. In particular, the figure illustrates execution of a cycle in which cyclic operation V is repeatedly executed so that so that the qubits go through at least all states of the computational basis according to a predetermined pattern. Starting with an initial state of a two qubits computational basis, e.g. ground state $|00\rangle$, repeated application of the cyclic operation $7$ to the qubits of the QPU results in cyclic change of the individual states that define the computation basis of the qubits. This way, at least four times application of $V$ allows cycling through all the computational states according to a predetermined pattern as shown in the figure: $|00\rangle \rightarrow |01\rangle \rightarrow |10\rangle \rightarrow |11\rangle \rightarrow |00\rangle \cdots$.

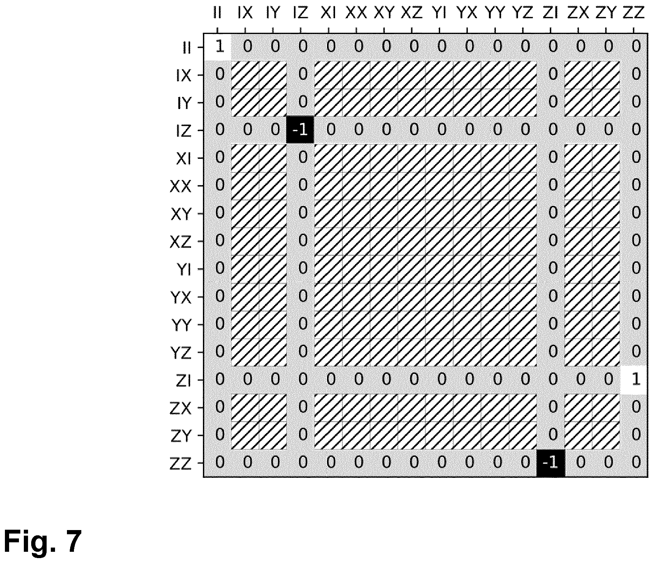

The ideal (noise-less) cyclic operation 7 illustrated in **Fig. 6** can be implemented based on a Pauli transfer matrix (PTM) associated with an *IXYZ* basis as shown in **Fig. 7,** wherein the columns define the input state and the rows the output state. The matrix entries indicated with dashed lines can have any value. With each measured qubit state $|\tilde{m}_n\rangle = |q_0 q_1\rangle$, a digitized measurement outcome $\tilde{m}_n$ may comprise two bit values, each representing the state of one of the qubits. The measurement outcomes determined per cycle may be used as input for a cost function computation, which will be described hereunder in greater detail.

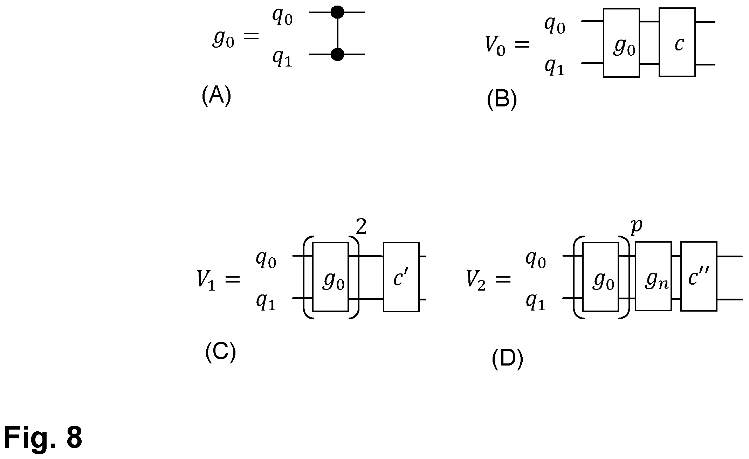

The construction of the cyclic operation $V$ may be based one or more basic circuits $g_i$, and a reconstruction circuit $c$ wherein the reconstruction circuit is configured such that the total operation $7$ is cyclic. The decomposition of a cyclic operation in a basic circuit and a reconstruction circuit is useful as it allows construction of cyclic operations that can amplify specific errors. This is further illustrated by Fig. 8A-8D depict the constructing cyclic test protocols for a multi-qubit calibration scheme according to an embodiment. In particular, the figure illustrates an example regarding the construction of different test protocols based on a basic operation $g_0$, in this example the *CZ* operation as shown in **Fig. 8A.** Generally, the basic operation may be one or more multi-qubit operations allowing interaction between the qubits and, optionally, one or more single qubit operations.

**Fig. 8B** depicts a first cyclic operation $V_0$ configured to execute the basic circuit $g_0$, and a subsequent first reconstruction operation $c$ which is configured to make $V_0$ cyclic. If an error, for example a gate error, is present in the basic operation, this error can be identified when executing $V_0$.

**Fig. 8C** depicts a second cyclic operation $V_1$ configured to execute two consecutive basic circuits $g_0$. Since the PTM associated with this second cyclic operation is different from the first cyclic operation of **Fig. 8B,** another second reconstruction operation $c'$ is needed to make $V_1$ cyclic. If one execution of the basic circuit $g_0$ introduces an error value, e.g. a phase error $\Delta\theta_{2Q}$, then executing the basic circuit twice amplifies the error by a factor of two. In certain cases however, aliasing effects may take place which may cause the optimization process to converge to a different minimum than the desired global minimum. For example, in case of a phase error of exactly 180°, ($\Delta\theta_{2Q}$ = 180°) no error is measured since $2\theta_{2Q}$ = 360° which equals the ideal conditional phase.

To address such aliasing problems, further cyclic operations can be constructed which can be used to distinguish between the desired global minimum and other (local) minima. For example, a third cyclic operation $V_2$ can be constructed which executes the basic circuit $g_0$ $p$-times thus amplifying the error $p$ times, e.g. p-times the phase error $p\theta_{2Q}$ unless $p\theta_{2Q}$ = 360°. A further, third reconstruction operation $c''$ (that is different from the first and second reconstruction operation) may be needed to make $V_2$ cyclic. The three cyclic operations in Fig. 8A-8C may form a family of cyclic operations $\{V_j\}$ that are associated with the basic operation.

Thus, constructing a family of cyclic operation based on one or more basic operations and a reconstruction operation allows realization of cyclic operations that can amplify specific errors (such as the phase error as explained above with reference to **Fig. 8),** while ensuring convergence to the desired global minimum. Different family members of a family of cyclic operations may be used to generate measurements outcomes which may be averaged to determine the cost as explained below in more detail. Averaging over the different family members will ensure that aliasing effects are minimized and the optimization will converge to a global minimum.

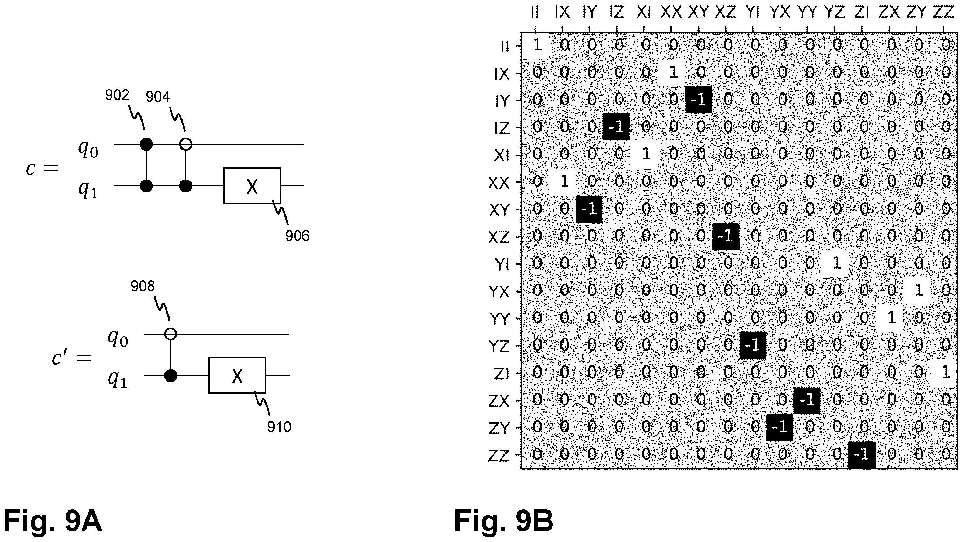

**Fig. 9A** illustrates possible reconstruction operations $c$ and $c'$ that can be used in combination with a CZ operation as a basic circuit as explained with reference to **Fig. 8B.** The figure illustrates a possible reconstruction operation $c$ associated with a CZ operation as a basic circuit, wherein the reconstruction operation $c$ includes a second conditional phase gate (canceling the one performed in $g_0$), followed by a CNOT operation and an $X$ gate operation on $q_1$. **Fig. 9B** illustrates the PMT of the cyclic operation that is based on the CZ operation as a basic circuit and $c$ as the recovery operation. Similarly, a reconstruction operation $c'$ needed to recover cyclic behavior when executing $V_1$ as shown in **Fig. 8C** could include a CNOT operation, followed by an $X$ gate on $q_1$, since the total operation performed by $(g_0)^2$ is the identity operation.

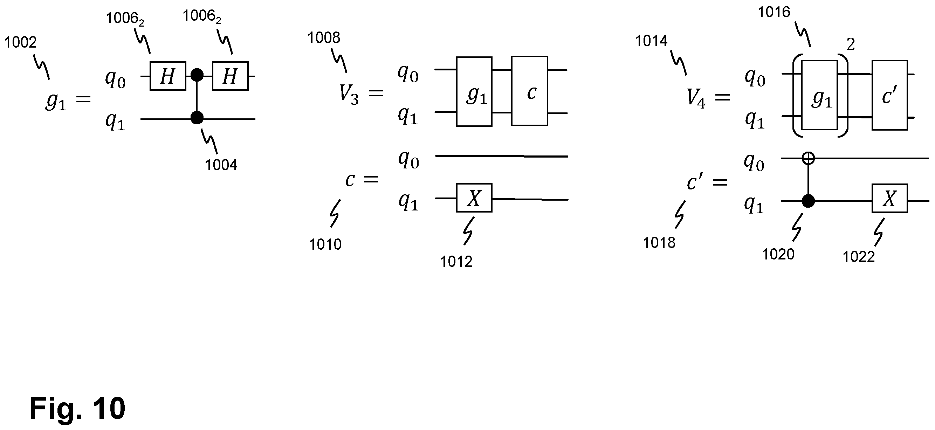

**Fig. 10** depicts a further example a construction of a cyclic operation that is based on a basic operation and a reconstruction operation. In this particular example, basic circuit $g_1$ **1002** may represent a conditional NOT gate including a combination of CZ operation **1004** and two Hadamard operations **1006$_{1,2}$**. Based on this basic circuit, a first cyclic operation $V_3$ **1008** may be constructed using a reconstruction circuit $c$ **1010** that only consist of a $X$ operation **1012** on $q_1$. A further cyclic operation $V_3$ **1014** may be constructed based on two times the execution of the basic circuit $(g_1)^2$ **1016** and a reconstruction operation $c'$ **1018** to implement cyclic behavior that comprises a CNOT operation **1020** and an $X$ gate **1022** on $q_1$.

Hence, the above-described embodiments show construction of a set (a family) of cyclic operations $\{V_j\}$ which are based on p-times execution of a single basic circuit followed by a reconstruction circuit which makes an operation V cyclic. Selecting different cyclic operations from the set of possible cyclic operations $\{V_j\}$ and averaging over these different cyclic operations allows the optimization scheme to be robust against aliasing and assure convergence to a global minimum that represents the optimal solution of the optimization problem. A limited number of basic circuits may be selected, to reduce the memory requirements on the control hardware while preserving sensitivity to the control parameters.

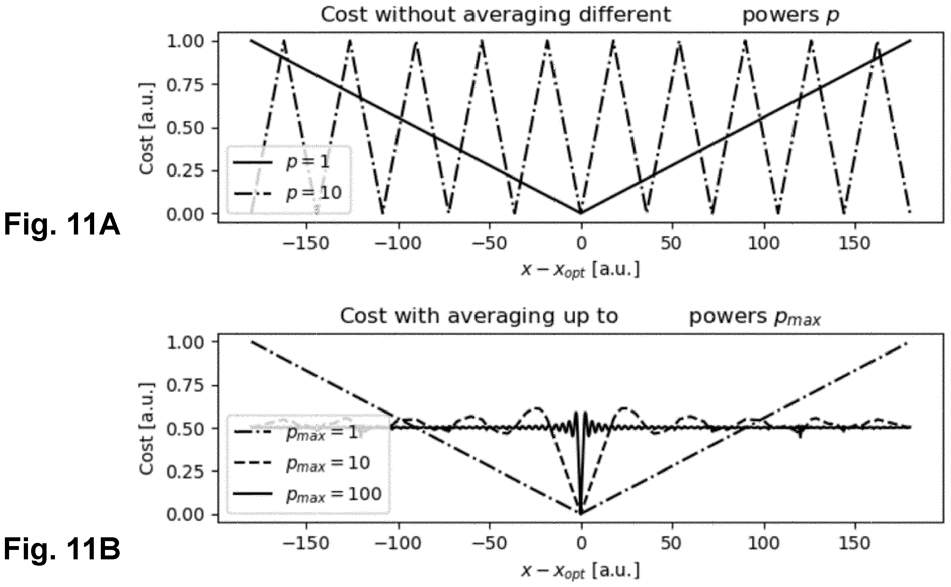

**Fig. 11A-11C** illustrate the effect of averaging results of different basic circuit powers. **Fig. 11A** illustrates a cost function for a basic operation power $(g_0)^p$ for $p = 1$ and $p = 10$ as a function of optimization parameter $x$. These graphs show that for $p = 10$ the sensitivity to the control parameter $x$ is increased near the optimal value $x_{opt}$, but that multiple minima (or maxima) are introduced which are caused by aliasing effects. Averaging the costs over different basic circuit powers will significantly reduce the aliasing effects. This is shown in **Fig. 11B,** which shows that averaging these powers suppresses the local minima while the increased sensitivity near the optimum value is preserved.

Thus, a family of cyclic operations $\{V_j\}$ may be defined from any member V can be selected. For the second step of **Fig. 2** (execute cyclic test protocols), the entire family $\{V_j\}$ or a substantial part of the family may be used. $N$ repetitions of experiments may be performed (as illustrated in **Fig. 5),** and for each repetition member $V$ of a family of cyclic operations $\{V_j\}$. This means that for every repetition a different implementation of the cyclic operation may be used, with different error amplification and a different number of minima or maxima. Preferably different cyclic operations with different number of minima or maxima may be selected wherein the number of minima or maxima of the different cyclic operations are not multiples of each other. Hence, the measurement outcomes $\tilde{M}$ can be associated with different cyclic operations, some of which have more error amplification and more minima or maxima, and some of which have less error amplification but also fewer minima or maxima. This way, when computing the cost function, one effectively averages over all the measurement outcomes $\{\tilde{M}\}$, thus averaging over the amplifications and minima, resulting in a graph as depicted in **Fig 11B**. An additional benefit hereof is that the overhead cause because we only have to upload all waveform instructions once to the control hardware, instead of having to upload it for every time when restarting an optimization loop of **Fig 2.**

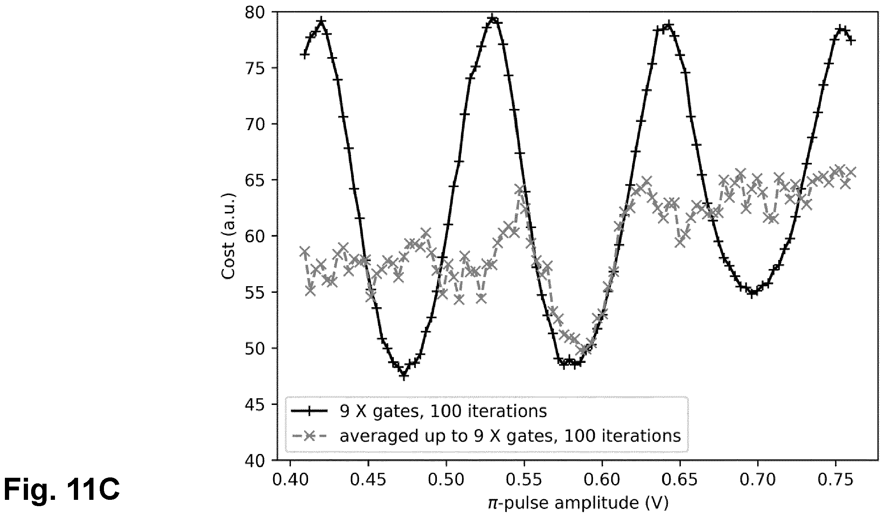

**Fig. 11C** depicts experimental data of an embodiment showing the effect of averaging cyclic operations of different lengths together. Here, the solid-black line contains 9 X gates per cyclic operation, showing multiple local minima (or maxima) when averaging up to 9 X gates (multiple cyclic operations as part of the same family of cyclic operations), the local minima disappear but the amplification effect remains.

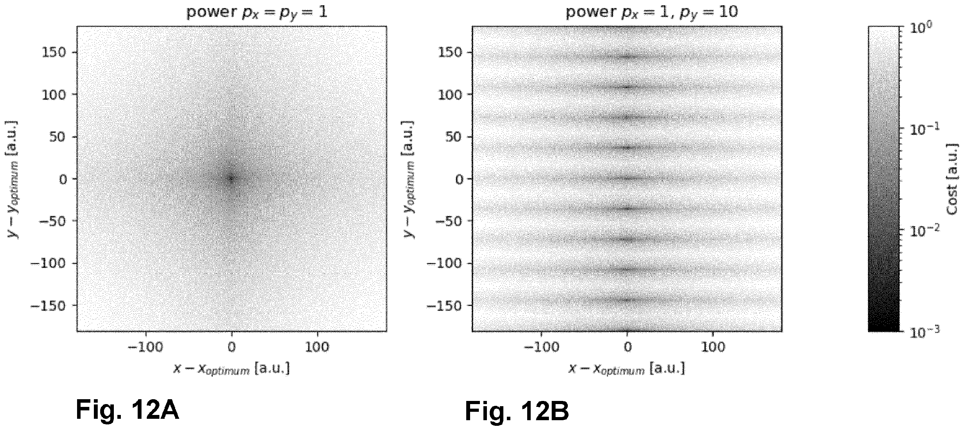

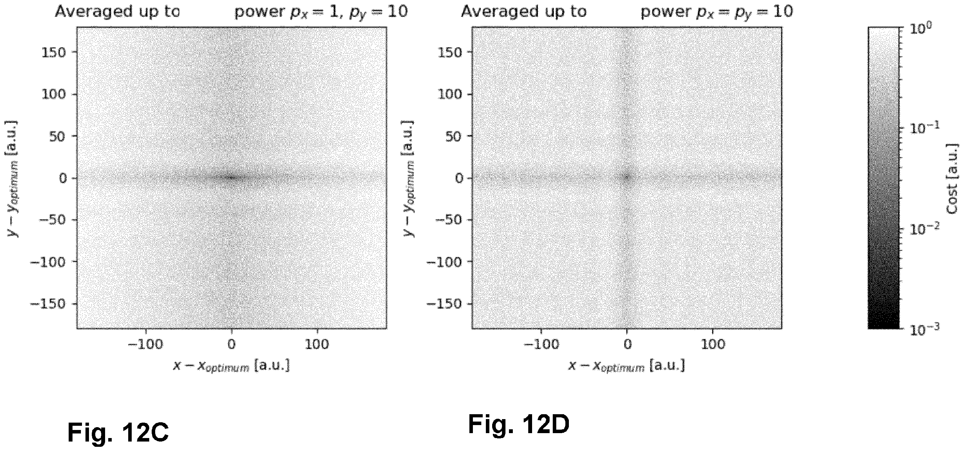

While most of the embodiments illustrate a one-dimensional parameters space, the technical teaching of the embodiments may be generalized to multidimensional parameter spaces. **Fig. 12A-12D** show an example of the amplification of the error sensitivity based on cyclic operations in a two-dimensional parameter space. **Fig 12A** shows the cost function landscape when both variables (x and y, with basis circuit powers $p_x$ and $p_y$ respectively) both have basic circuit power 1. Increasing the amplification of the y variable to $p_y = 10$ (as shown in **Fig. 12B)** increases the sensitivity to this variable, but also introduces multiple minima. **Fig. 12C** shows that averaging over all powers up to $p_y = 10$ preserves the sensitivity, but reduces the local minima for $y$. If the averaging is also applied to $p_x$ the sensitivity to both parameters increases, while local minima are reduced.

Further embodiments may relate to the computation of the cost function that is needed to compute an error for the optimization scheme (see also step **206** of **Fig. 2)**. As described above, when executing the cyclic operation, the measured states will show the cyclic behaviour according to a predetermined pattern. Based on a declared measurement outcomes $\{\tilde{M}\}$ and the set of ideal measurement outcomes $\{M\}$ that implements a cycle, e.g. the cycle $|00\rangle$, $|01\rangle$, $|10\rangle$, $|11\rangle$ as shown in **Fig. 6,** an error can be determined. Each (declared) measured outcome consists of a number of bits that define the computational basis. For example, for a two-bit configuration the declared measurement outcome may comprise two bits representing the (declared) state of the two qubits. A cost function of the following expression may be defined to compute an error:

$$\epsilon_c = \frac{1}{N} \sum_{n=2}^{N} f(\tilde{M}_{n-1}, \tilde{M}_n)$$

where the function $f(\tilde{M}_{n-1}, \tilde{M}_n)$ equals 0 if the two subsequent declared states $\tilde{M}_{n-1}, \tilde{M}_n$ follow the pattern of states associated with the execution of a cycle (as e.g. defined with reference to **Fig. 6)** and else equals 1. In other words, deviations from the cyclic behaviour are penalized, but not necessarily deviations from the initially defined cycle $M_n$. There are different kinds of errors that can be accounted for: gate errors, readout errors and leakage. Table 1 shows an example, wherein an error occurs on repetition 2, i.e. the second execution of the cyclic operation.

Table 1: computational states when repeatedly executing a cyclic operation

| Repetition | 1 | 2 | 3 | 4 | 5 | 6 | 7 | 8 | 9 |
|---|---|---|---|---|---|---|---|---|---|
| Ideal | 00 (00) | 01 (01) | 10 (10) | 11 (11) | 00 (00) | 01 (01) | 10 (10) | 11 (11) | 00 (00) |
| Gate error | 00 (00) | 00 (**00**) | 01 (01) | 10 (10) | 11 (11) | 00 (00) | 01 (01) | 10 (10) | 11 (11) |
| Readout error | 00 (00) | 01 (**00**) | 10 (**10**) | 11 (11) | 00 (00) | 00 (00) | 10 (10) | 11 (11) | 00 (00) |
| Leakage | 00 (00) | 02 (01) | 02 (**01**) | 02 (**01**) | 02 (**01**) | 02 (**01**) | 02 (**01**) | 01 (**00**) | 01 (01) |

Table 1 shows two-qubit states and measurement outcome after each execution of the cyclic operation (a repetition) in the case of an ideal experiment (no errors), and in case of a gate error, a readout error or leakage. The first value in each column depicts the two-qubit state, the value in brackets represents the declared state after measurement. The underscored values indicate where the error occurred, the bold-faced values indicate where the declared state deviates from the expected state (deviates from the predetermined pattern).

The expected outcome of the second repetition is $|01\rangle$, but the noisy execution of the cyclic operation may introduce a gate error that leads to state $|00\rangle$. If the error rate is sufficiently small, the cycle continues after this error. Hence, only one error is flagged, and there is a relatively small contribution to the total cost.

For readout errors an error will get flagged twice. Firstly, the cycle is discontinued between repetition 1 and 2 which contributes to the cost. Secondly, the cycle is discontinued between repetition 2 and 3. Hereafter, the cycle continuous as expected.

For leakage errors, the qubit state at the end of repetition 2 will be $|02\rangle$. However, if no procedure is implemented to detect leakage, the declared outcome will be $|01\rangle$. Since the gate operations do not map a leaked state back to the computational basis, the qubits will remain in this state until another leakage error occurs, in this example during repetition 8. After this second leakage error, the cycle will continue as expected. Thus, leakage errors will give a large contribution to the cost, making this protocol particularly sensitive to such errors.

Table 2: computational states when repeatedly executing a two-qubit restless tune-up cycle and the associated cost function values $\varepsilon_R$ for different error types.

| Measurement | 1 | 2 | 3 | 4 | 5 | 6 | 7 | $\varepsilon_R$ |
|---|---|---|---|---|---|---|---|---|
| No errors | 00 (00) | 10 (10) | 01 (01) | 11 (11) | 00 (00) | 10 (10) | 01 (01) | **0** |
| Gate error | 00 (00) | **00 (00)** | 10 (10) | 01 (01) | 11 (11) | 00 (00) | 10 (10) | **1/6** |
| Readout error | 00 (00) | **10 (00)** | **01 (01)** | 11 (11) | 00 (00) | 10 (10) | 01 (01) | **2/6** |
| Leakage error | 00 (0) | 20 (10) | **20 (10)** | **20 (10)** | **20 (10)** | **10 (10)** | 01 (01) | **4/6** |

Table 2 illustrates the impact of gate errors, readout errors and leakage error on the behavior of the two-qubit restless tune-up cycle, including the cost function values $\varepsilon_R$ for the different error types. The cost function values show how heavily different errors are penalized. In this example, the cost function is a fraction of 6, which corresponds to the number of applied gate sequences. Specifically, one gate sequence is applied between every measurement.

Table 3: computational states when repeatedly executing single-qubit restless tune-up cycle and the associated cost function values $\varepsilon_R$ for different error types.

| Measurement | 1 | 2 | 3 | 4 | 5 | 6 | 7 | $\varepsilon_R$ |
|---|---|---|---|---|---|---|---|---|
| No errors | 0 (0) | 1 (1) | 0(0) | 1 (1) | 0 (0) | 1 (1) | 0 (0) | **0** |
| Gate error | 0 (0) | **0 (0)** | 1 (1) | 0 (0) | 1 (1) | 0 (0) | 1 (1) | **1/6** |
| Readout error | 0 (0) | **1 (0)** | **0 (0)** | 1 (1) | 0 (0) | 1 (1) | 0 (0) | **2/6** |
| Leakage error | 0 (0) | 2 (1) | **2 (1)** | **2 (1)** | **1 (1)** | 0 (0) | 1 (1) | **3/6** |

Table 3 illustrates the impact of gate errors, readout errors and leakage error on the behavior of the single-qubit restless tune-up cycle, including the cost function values $\varepsilon_R$ for the different error types for a single-qubit cycle.

The terminology used herein is for the purpose of describing particular embodiments only and is not intended to be limiting. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments.

**Claims**

**1.** Method for calibrating one or more qubits comprising;

configuring one or more qubit control signals based on one or more optimization parameters, the one or more qubit control signals defining one or more cyclic operations;
repeatedly executing at least one of the one or more cyclic operations by repeatedly applying the one or more qubit control signals to the one or more qubits, the repeated execution of the at least one cyclic operation causing the qubits to evolve in a predetermined pattern through all states of the computational basis;
generating one or more measurement outcomes by measuring the states of the one or more qubits in the computational basis after execution of each cyclic operation;
computing an error using a cost function based on the one or more measurement outcomes and based on one or more target outcomes associated with the predetermined pattern of states of the computation basis; and,
updating the values of the one or more optimization parameters based on the error.

**2.** Method according to claim 1 further comprising repeating the execution of the cyclic operations, the generation of the one or more measurements outcomes and the computation of the error until the error meets one or more optimization conditions.

**3.** Method according to claims 1 or 2 wherein the cyclic operation includes one or multiple executions of a basic multi-qubit operation followed by the execution of a reconstruction operation, which when combined with the one or multiple executions of the basic multi-qubit operation defines a cyclic operation.

**4.** Method according to any of claims 1-3 wherein after an execution of a cyclic operation, the end state of the one or more qubits after measuring the states of the qubits is used as the input state for the next execution of a cyclic operation.

**5.** Method according to any of claims 1-4 wherein the costs function is configured to penalize measurement outcomes if they do not follow the predetermined pattern of states.

6.  Method according to any of claims 1-5 wherein the error is optimized to find one or more optimal control parameters that maximizes a gate fidelity or minimizes a gate infidelity.

7.  Method according to any of claims 1-6 wherein the repeated execution of the at least one cyclic operation and the generation of the one or more measurement outcomes is repeated for different cyclic operations selected from a family of cyclic operations and wherein the error is computed based the measurement outcomes associated with the different cyclic operations.

8.  Method according to claim 7 wherein the different cyclic operations include a first cyclic operation associated with a first error amplification and/or a first number of minima or maxima and a second cyclic operation associated with a second error amplification and/or second number of minima or maxima, wherein the first error amplification is different from the second amplification and the first number of minima or maxima is different from the second number of minima or maxima.

9.  Method according to claim 8, wherein the number of minima or maxima associated with the first cycle and the number of minima or maxima associated with the second cycle are not multiples of each other.

10. A hybrid computing system comprising a classical computer and a quantum processor, wherein the hybrid computing system is configured for:

    configuring one or more qubit control signals based on one or more optimization parameters, the one or more qubit control signals defining one or more cyclic operations;
    repeatedly executing at least one of the one or more cyclic operations by repeatedly applying the one or more qubit control signals to the one or more qubits, the repeated execution of the at least one cyclic operation causing the qubits to evolve in a predetermined pattern through all states of the computational basis;
    generating one or more measurement outcomes by measuring the states of the one or more qubits in the computational basis after execution of each cyclic operation;
    computing an error using a cost function based on the one or more measurement outcomes and based on one or more target outcomes associated with the predetermined pattern of states of the computation basis; and,
    updating the values of the one or more optimization parameters based on the error.

11. A hybrid computing system according to claim 10 further being configured for:
    repeating the execution of the cyclic operations, the generation of the measurements outcomes and the computation of the error until the error meets one or more optimization conditions.

12. System according to claims 10 or 11 wherein the hybrid computing system is configured for executing any of the method step of claim 1-9.

13. A computer program or suite of computer programs comprising at least one software code portion, the software code portion, when run on a hybrid computer comprising a classical computer connected to a quantum computer, being configured for executing the method steps according any of claims 1-9.

Fig. 1

| 0./4. | error $\epsilon_c$ | 3. |
|---|---|---|
| optimizer    208 | ← | calculate cost-function    206 |

control parameters: $\vec{\theta}$

declared qubit states
$M = [00, ..., 11, 01]$

| 1. | | 2. |
|---|---|---|
| configure control signals  202 | → | execute cyclic test protocols 204 |

# Fig. 2

|   | I | X | Y | Z |
|---|---|---|---|---|
| I | 1 | 0 | 0 | 0 |
| X | 0 |   |   | 0 |
| Y | 0 |   |   | 0 |
| Z | 0 | 0 | 0 | -1 |

**Fig. 3**

*Energy*

$|3\rangle$ — Leakage subspace
$|2\rangle$

$|1\rangle$ — Computational subspace
$|0\rangle$

**Fig. 4**

## 2. Execute test protocols

Declared states $|\widetilde{m}_n\rangle$

configured
control
pulses

$q_0$ $|m_{n-1}^0\rangle$

$q_1$ $|m_{n-1}^1\rangle$

$V$

$|m_n^0\rangle$

$|m_n^1\rangle$

$N$ repetitions

measurement
outcomes
$\widetilde{M} = [00, 01, \cdots, 11, 01]$

**Fig. 5**

$V$

$|00\rangle$ → $V$ → $|01\rangle$ → $V$ → $|10\rangle$ → $V$ → $|11\rangle$

**Fig. 6**

Fig. 7

Fig. 8

EP 4 462 319 A1

$$c = $$

$q_0$ —●——⊕———  
$q_1$ —●——●——[ X ]—

902 904 906

$$c' = $$

$q_0$ —⊕———  
$q_1$ —●——[ X ]—

908 910

**Fig. 9A**

| | II | IX | IY | IZ | XI | XX | XY | XZ | YI | YX | YY | YZ | ZI | ZX | ZY | ZZ |
|---|---|---|---|---|---|---|---|---|---|---|---|---|---|---|---|---|
| II | 1 | 0 | 0 | 0 | 0 | 0 | 0 | 0 | 0 | 0 | 0 | 0 | 0 | 0 | 0 | 0 |
| IX | 0 | 0 | 0 | 0 | 0 | 1 | 0 | 0 | 0 | 0 | 0 | 0 | 0 | 0 | 0 | 0 |
| IY | 0 | 0 | 0 | 0 | 0 | 0 | -1 | 0 | 0 | 0 | 0 | 0 | 0 | 0 | 0 | 0 |
| IZ | 0 | 0 | 0 | -1 | 0 | 0 | 0 | 0 | 0 | 0 | 0 | 0 | 0 | 0 | 0 | 0 |
| XI | 0 | 0 | 0 | 0 | 1 | 0 | 0 | 0 | 0 | 0 | 0 | 0 | 0 | 0 | 0 | 0 |
| XX | 0 | 1 | 0 | 0 | 0 | 0 | 0 | 0 | 0 | 0 | 0 | 0 | 0 | 0 | 0 | 0 |
| XY | 0 | 0 | -1 | 0 | 0 | 0 | 0 | 0 | 0 | 0 | 0 | 0 | 0 | 0 | 0 | 0 |
| XZ | 0 | 0 | 0 | 0 | 0 | 0 | 0 | -1 | 0 | 0 | 0 | 0 | 0 | 0 | 0 | 0 |
| YI | 0 | 0 | 0 | 0 | 0 | 0 | 0 | 0 | 0 | 0 | 0 | 1 | 0 | 0 | 0 | 0 |
| YX | 0 | 0 | 0 | 0 | 0 | 0 | 0 | 0 | 0 | 0 | 0 | 0 | 0 | 1 | 0 | 0 |
| YY | 0 | 0 | 0 | 0 | 0 | 0 | 0 | 0 | 0 | 0 | 0 | 0 | 0 | 0 | 1 | 0 |
| YZ | 0 | 0 | 0 | 0 | 0 | 0 | 0 | 0 | -1 | 0 | 0 | 0 | 0 | 0 | 0 | 0 |
| ZI | 0 | 0 | 0 | 0 | 0 | 0 | 0 | 0 | 0 | 0 | 0 | 0 | 0 | 0 | 0 | 1 |
| ZX | 0 | 0 | 0 | 0 | 0 | 0 | 0 | 0 | 0 | -1 | 0 | 0 | 0 | 0 | 0 | 0 |
| ZY | 0 | 0 | 0 | 0 | 0 | 0 | 0 | 0 | 0 | 0 | -1 | 0 | 0 | 0 | 0 | 0 |
| ZZ | 0 | 0 | 0 | 0 | 0 | 0 | 0 | 0 | 0 | 0 | 0 | -1 | 0 | 0 | 0 | 0 |

**Fig. 9B**

EP 4 462 319 A1

Fig. 10

EP 4 462 319 A1

Fig. 11A

Fig. 11B

**Fig. 11C**

power $p_x = p_y = 1$

$y - y_{optimum}$ [a.u.]

$x - x_{optimum}$ [a.u.]

**Fig. 12A**

power $p_x = 1$, $p_y = 10$

$y - y_{optimum}$ [a.u.]

$x - x_{optimum}$ [a.u.]

**Fig. 12B**

Cost [a.u.]

EP 4 462 319 A1

Averaged up to        power $p_x = 1, p_y = 10$

Averaged up to        power $p_x = p_y = 10$

**Fig. 12C**

**Fig. 12D**

Europäisches
Patentamt

European
Patent Office

Office européen
des brevets

# EUROPEAN SEARCH REPORT

**Application Number**

EP 24 16 8112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KENTARO HEYA ET AL: "Variational Quantum Gate Optimization", ARXIV.ORG, CORNELL UNIVERSITY LIBRARY, 201 OLIN LIBRARY CORNELL UNIVERSITY ITHACA, NY 14853, 30 October 2018 (2018-10-30), XP080933201, * abstract; figures 1, 2 * * page 1, column 2, paragraph 2 * * page 2, column 1, paragraph 2 * * page 2, column 2, paragraph 1 * * page 2, column 2, paragraph 2 * * page 6, column 1, paragraph 2 * * page 6, column 2, paragraph 1 * * page 3, column 1, paragraph 3 * ----- | 1-13 | INV. G06N10/40 G06N10/60 |
| X,D | ROL M A ET AL: "Restless Tuneup of High-Fidelity Qubit Gates", ARXIV.ORG, CORNELL UNIVERSITY LIBRARY, 201 OLIN LIBRARY CORNELL UNIVERSITY ITHACA, NY 14853, 15 November 2016 (2016-11-15), XP080731832, DOI: 10.1103/PHYSREVAPPLIED.7.041001 * figure 1 * * page 1, column 2, paragraph 1 * * page 1, column 2, paragraph 3 * * page 2, column 2, paragraph 1 * * page 2, column 2, paragraph 3 * * page 2, column 2, paragraph 4 - paragraph 5 * ----- | 1-13 | TECHNICAL FIELDS SEARCHED (IPC) G06N |
| X | US 2022/206866 A1 (MAKSYMOV ANDRII [US] ET AL) 30 June 2022 (2022-06-30) * claims 1, 2 * * paragraph [0050] - paragraph [0051] * * paragraph [0054] * * paragraph [0089] * ----- | 1-13 | |

The present search report has been drawn up for all claims

| Place of search | Date of completion of the search | Examiner |
|---|---|---|
| The Hague | 18 September 2024 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 16 8112

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2024

| Patent document cited in search report | | Publication date | Patent family member(s) | | Publication date |
|---|---|---|---|---|---|
| US 2022206866 | A1 | 30-06-2022 | CN | 117280354 A | 22-12-2023 |
| | | | EP | 4272132 A2 | 08-11-2023 |
| | | | JP | 2024505312 A | 05-02-2024 |
| | | | US | 2022206866 A1 | 30-06-2022 |

EPO FORM P0459

For more details about this annex : see Official Journal of the European Patent Office, No. 12/82

**EP 4 462 319 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ROL et al.** Restless Tuneup of High-Fidelity Qubit Gates. *Phys. Rev. Applied,* 2017